# EUROPEAN PATENT SPECIFICATION

(11) **EP 3 660 527 B1**
(45) Date of publication and mention of the grant of the patent: **04.05.2022**
(21) Application number: 18838743.5
(22) Date of filing: 04.07.2018
(51) Int. Cl.: G01R 31/34, G01B 21/16, G01B 21/22, H02K 15/00, H02K 11/20

(54) **MEASUREMENT AND CONTROL SYSTEM FOR GENERATOR ROTOR PUMPING**
MESS- UND STEUERUNGSSYSTEM FÜR GENERATORROTORPUMPE
SYSTÈME DE MESURE ET DE COMMANDE DE POMPAGE DE ROTOR DE GÉNÉRATEUR

(30) Priority: 28.07.2017 CN 201710633489
(43) Date of publication of application: 03.06.2020
(73) Proprietor: China Nuclear Power Operations Co., Ltd., Shenzhen, Guangdong 518026 (CN); China General Nuclear Power Corporation, Shenzhen, Guangdong 518026 (CN); CGN Power Co., Ltd., Shenzen, Guangdong 518026 (CN)
(72) Inventor: WANG, Jiantao, Shenzhen Guangdong 518000 (CN)
(74) Representative: Westphal, Mussgnug & Partner, Patentanwälte mbB
(86) International application number: PCT/CN2018/094490
(87) International publication number: WO 2019/019886

(56) References cited:
- EP-A1- 2 615 728
- CN-A- 101 270 976
- CN-A- 107 544 023
- CN-U- 206 117 444
- CN-U- 206 117 444
- JP-A- 2000 074 611
- KR-U- 20080 001 950
- US-A1- 2015 367 474

## Description

This application claims priority to Chinese Patent Application No. CN201710633489.X, entitled "Measurement and Control System for Generator Rotor Pumping", filed with the China Patent Office on July 29, 2017.

### Technical Field

The invention relates to the technical field of generators, in particular to a measurement and control system for generator rotor pumping.

### Background Art

Large horizontal generators are often used in nuclear power projects, the rotors of which have to be drawn and then inserted to detect the condition of the rotors. When a rotor is to be drawn and inserted, the rotor is lifted by two lifting ropes at the two ends thereof respectively, and then a slide plate used for bearing the rotor is placed in the stator. In general, a team of workers are respectively deployed at the steam end and the exciter end of the generator in the process of lifting the rotor by the lifting rope to monitor the gap between the rotor and the stator so as to avoid damage to the generator caused by collision between them. The rotor of the large horizontal generator is several tens of meters long, and the minimum gap between the rotor and the stator is only about 50 mm in the process of drawing and inserting the rotor, which accordingly requires that the attention of workers should be highly concentrated when the rotor is being lifted. However, human observation is prone to error, which reduces the safety of drawing and inserting the rotor.

An example of a generator rotor sliding device is disclosed in publication CN 206 117 444 U. A related measurement and control system is disclosed in document US2015367474.

### Summary of the Invention

According to various embodiments of the present application, a system for monitoring drawing and inserting a generator rotor with improved safety is provided.

A measurement and control system for generator rotor pumping, used for monitoring a position of a rotor relative to a stator of a generator, comprising:
a plurality of range-finding probes, some of the range-finding probes being provided on a side wall of the rotor at intervals close to a first end of the rotor, some of the range-finding probes being provided on an inner wall of the stator at intervals close to a first end of the generator, and each of the range-finding probes being used for obtaining a gap between a region of the rotor and a region of the stator;
an inclination sensor, provided in a slide plate positioned in the stator and bearing the rotor, the inclination sensor being used for measuring a levelness of the slide plate;
a control module, connected with the range-finding probes and capable of receiving first information sent by the range-finding probes, the first information being a gap between the rotor and the stator; the control module being also connected with the inclination sensor and capable of receiving second information sent by the inclination sensor, the second information being the levelness of the slide plate; and
a display screen, connected with the control module and capable of displaying the first information and the second information.

The details of one or more embodiments of the invention are set forth in the accompanying drawings and the description below. Other features, objects, and advantages of the invention will be apparent from the description, drawings and the claims.

### Brief Description of the Drawings

In order to more clearly explain the embodiments of the present invention the drawings used in the description of the embodiments will be briefly introduced below. The drawings in the following description are merely some embodiments of the present invention. For those of ordinary skill in the art, other drawings can be obtained based on these drawings and the description without inventive efforts.
FIG. 1 is a diagram of an application of a measurement and control system for generator rotor pumping to a generator according to an embodiment;
FIG. 2 is another diagram of an application of the measurement and control system for generator rotor pumping shown in FIG. 1 on a generator;
FIG. 3 is a block diagram of the measurement and control system for generator rotor pumping of FIG. 1;
FIG. 4 is a schematic diagram showing the matching of range-finding probes and a fan seat in the measurement and control system for generator rotor pumping shown in FIG. 1;
FIG. 5 is a cross-sectional view of a slide plate of FIG. 1.

### Detailed Description of the Invention

To facilitate an understanding of the present invention, the present invention will now be described more fully hereinafter with reference to the accompanying drawings. Preferred embodiments of the present invention are illustrated in the accompanying drawings. This invention may, however, be embodied in many different forms and should not be construed as limited to the embodiments set forth herein. Rather, these embodiments are provided so that this disclosure will be thorough and complete.

It should be noted that when an element is referred to as being "secured" to another element, the relationship can be direct or has an intermediary element. When an element is referred to as being "connected" to another element, it can be directly connected to the other element or by an intermediary element. As used herein, the terms "inner", "outer", "left", "right", and the like are used for descriptive purposes only and are not intended to be the only embodiments.

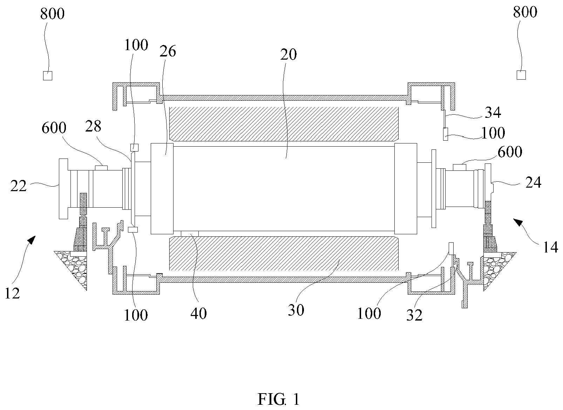

A left end of a generator is a steam end 12, a right end of the generator is an exciter end 14, a left end of a rotor 20 is a first end 22, and a right end of the rotor 20 is a second end 24, as viewed in FIG. 1. When the rotor 20 is being drawn out, it mainly experiences three stages, including: a preparation stage, an intermediate stage and a later stage. In the preparation stage, the rotor 20 are lifted by two lifting ropes at the first end 22 and the second end 24 thereof respectively, and then a slide plate 40 is placed into a gap between the rotor 20 and a stator 30 from the exciter end 14, and the slide plate 40 is pushed into one end of the stator 30 close to the steam end 12. After the rotor 20 is lowered, the rotor 20 is supported on the slide plate 40. At this time, the lifting rope at the first end 22 is removed, the rotor 20 is supported at the left end thereof by the slide plate 40, and the right end is still hung by the lifting rope. In the intermediate stage, the rotor 20 is drawn by a winch so that the rotor 20 slowly moves in a direction from the steam end 12 to the exciter end 14, and the slide plate 40 moves together with the rotor 20 when the rotor 20 moves.

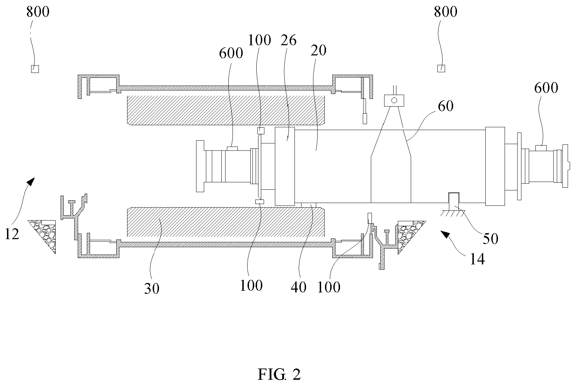

In conjunction with FIG. 2, in the later stage, when a length by which the rotor 20 is drawn out is greater than or equal to half the total length of the rotor 20, the winch is removed and a stake 50 is provided at the exciter end 14 such that the left half of the rotor 20 is supported on the slide plate 40 and the right half is supported on the stake 50. At this point, the lifting rope at the second end 24 is removed and the rotor 20 is suspended at the middle portion thereof by a double lifting rope 60, trying to enable the center of the double lifting rope 60 to coincide with the center of gravity of the rotor 20. The rotor 20 is lifted so that the rotor 20 is separated from the slide plate 30 and the stake 50, and the rotor 20 is completely drawn out from the stator 30 by collaboration of a crane and workers. The method of inserting the rotor 20 into the stator 30 is similar and will not be described further herein.

The operation of lifting the rotor occurs in both the preparation stage and the later stage. The rotor of such a large horizontal generator is several tens of meters long, with the gap between the rotor and the stator being only 96 mm, and a rotor retaining ring 26 is 43.5 mm larger than an outer diameter of the rotor, so that the gap between the stator 30 and the retaining ring 26 is only 52.5 mm after the retaining ring 26 enters the stator 30. The gap is so small that when the rotor 20 is lifted, the rotor 20 is likely to collide with the stator 30. In order to improve the safety of drawing and inserting the rotor 20, as shown in FIGS. 1 to 3, this embodiment provides a measurement and control system for generator rotor pumping 70 for monitoring the position of the rotor 20 relative to the stator 30 in real time.

Specifically, the measurement and control system for generator rotor pumping 70 includes distance measurement probes 100 for measuring a gap between the rotor 20 and the stator 30, a control module 200, and a display screen 300. A plurality of range-finding probes 100 are provided, some of the range-finding probes 100 are arranged on a side wall of the rotor 20 at intervals and close to the first end 22, and some of the range-finding probes 100 are arranged on an inner wall of the stator 30 at intervals and close to the exciter end 14. The control module 200 is connected to the range-finding probes 100 and can receive first information sent by the range-finding probes 100, the first information being a gap between the rotor 20 and the stator 30. the display screen 300 is connected to the control module 200 and can display the first information. In the embodiment, the range-finding probe 100 is a magnetic type laser ranging sensor, having a measurement range being about 50 mm and a precision being up to 1 mm. In other embodiments, the range-finding probe 100 may also be an ultrasonic ranging sensor or an infrared ranging sensor.

When the rotor 20 is being drawn and inserted, the range-finding probe 100 can measure the gap between the rotor 20 and the stator 30 in each direction in real time and send the measured data to the control module 200, and a worker can get the data in time through the display screen 300 and accurately adjust the position of the rotor 20 relative to the stator 30 to prevent the rotor 20 from colliding with the stator 30. Compared with human eye observation, the data measured by the range-finding probe 100 is more accurate, command errors caused by human observation can be effectively reduced, and engineering safety is improved. According to the invention, fewer workers are required to be specially deployed at the steam end 12 and the exciter end 14 to monitor the gap size when the rotor 20 is being drawn and inserted in conventional manner, thereby saving the labor costs.

The measurement and control system for generator rotor pumping 70 further includes cameras 400 connected with the control module 200, wherein the cameras 400 are used for taking pictures of the gap between the rotor 20 and the stator 30 and sending the pictures to the control module 200 to be displayed on the display screen 300, so that a worker can check the gap at each position at any time. One camera 400 includes a light source for illuminating a photographing region of the camera 400 to make a picture displayed on the display screen 300 clearer. A plurality of cameras 400 are provided and correspond to the range-finding probes 100 one to one, that is, the number of the cameras 400 is equal to the number of the range-finding probes 100, and one camera 400 is necessarily provided beside one range-finding probe 100.

In this embodiment, the rotor 20 is provided with a fan seat 28 adjacent the first end 22. The stator 30 is provided with a windshield ring 32 adjacent the exciter end 14. some of the range-finding probes 100 are arranged on the fan seat 28 at intervals, some of the range-finding probes 100 are arranged on the windshield ring 32 at intervals, and when the range-finding probes 100 are connected with the windshield ring 32, the range-finding probes 100 are rendered flush with the inner wall of the stator 30 by means of extension rods 34. Accordingly, the cameras 400 are also arranged on the fan seat 28 and the windshield ring 32, respectively. As can be seen from FIG. 1, the diameter of the fan seat 28 is smaller than the diameter of the retaining ring 26 and greater than the diameter of the first end 22, and the arrangement of the range-finding probes 100 and the cameras 400 on the fan seat 28 prevents damage to the range-finding probes 100 and the cameras 400 when the rotor 20 is being drawn or inserted, and can provide a better shooting angle at which the camera 400 is not blocked. Likewise, the windshield ring 32 also provides an optimal mounting position, with both the safety of the range-finding probes 100 and the shooting angle of the cameras 400 considered.

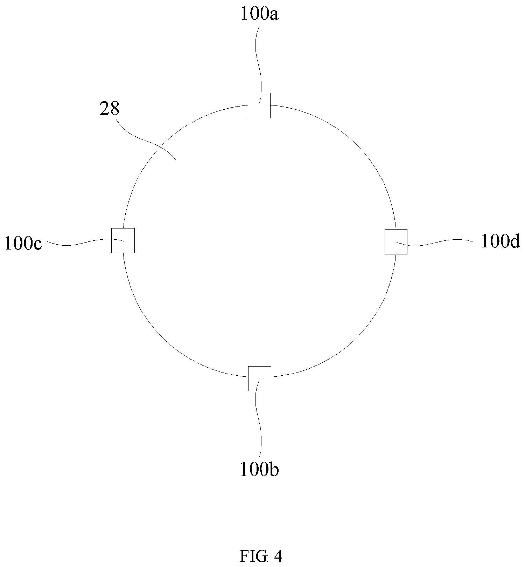

Further, as shown in FIGS. 1 and 4, in this embodiment, eight range-finding probes 100 are provided, wherein four range-finding probes 100 are arranged at intervals on the fan seat 28, and the other four range-finding probes 100 are arranged at intervals on the windshield ring 32.

In addition, on the fan seat 28, four range-finding probes 100 are disposed opposite to each other in pairs, and two of the range-finding probes 100 are located in a vertical direction and the other two range-finding probes 100 are located in a horizontal direction.

On the windshield ring 32, four range-finding probes 100 are arranged opposite to each other in pairs, and two range-finding probes 100 are located in a vertical direction and the other two range-finding probes 100 are located in a horizontal direction.

Taking the fan seat 28 as an example, it is assumed that the four range-finding probes 100 on the fan seat 28 are a first range-finding probe 100a, a second range-finding probe 100b, a third range-finding probe 100c, and a fourth range-finding probe 100d, respectively. As viewed from the steam end 12 to the exciter end 14, it can be seen from FIG. 4 that a side view of the fan seat 28 is circular, the first range-finding probe 100a is located at the highest point of the circle, the second range-finding probe 100b is located at the lowest point of the circle, the third range-finding probe 100c is located at the left most point of the circle, and the fourth range-finding probe 100d is located at the rightmost point of the circle. When the gap measured by the first range-finding probe 100a is small, the worker needs to adjust the first end 22 of the rotor 20 downward. When the gap measured by the second range-finding probe 100b is small, the worker needs to adjust the first end 22 of the rotor 20 upward. When the gap measured by the third range-finding probe 100c is small, the worker needs to adjust the first end 22 of the rotor 20 to the right. When the gap value measured by the fourth range-finding probe 100d is small, the worker needs to adjust the first end 22 of the rotor 20 to the left. The upper, lower, left and right directions are most intuitive to the worker, and adjustment in these four directions is also most convenient when adjusting the position of the rotor 20.
the display screen 300 can display the gaps corresponding to the first range-finding probe 100a, the second range-finding probe 100b, the third range-finding probe 100c, and the fourth range-finding probe 100d in real time, and can also zoom in to display the video of the position where the gap value is minimum so as to highlight and warn workers.

The operation mechanism of the four range-finding probes 100 on the windshield ring 32 is the same as that of the four range-finding probes 100 on the fan seat 28 and will not be described in detail herein.

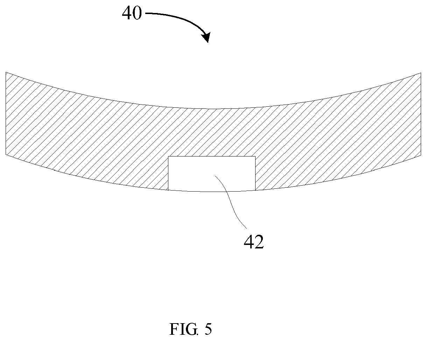

As shown in FIGS. 1, 3 and 5, a side of the slide plate 40 close to the stator 30 is an arc-shaped surface, and after the slide plate 40 is placed in the stator 30, the arc-shaped surface can be completely adhered to the inner wall of the stator 30. The slide plate 40 serves as the sole support for bearing the weight of the left half of the rotor 20, and the levelness of the slide plate 40 is directly related to whether it can bear such a load. In order to detect the levelness of the slide plate 40, the measurement and control system for generator rotor pumping 70 of this embodiment is further provided with an inclination sensor 500 on the slide plate 40. Specifically, the side of the slide plate 40 close to the stator 30 is provided with a recess 42, and the inclination sensor 500 is accommodated in the recess 42. The inclination sensor 500 is used for measuring the levelness of the slide plate 40, is connected with the control module 200, and can send second information to the control module 200, the second information being the levelness of the slide plate 40. The display screen 300 can display the second information to facilitate adjustment of the position of the slide plate 40 by a worker.

The inclination sensor 500 can monitor the levelness of the slide plate 40 in real time so as to ensure that the slide plate 40 can always be in an optimal bearing position in the process of drawing and inserting the rotor 20 and improve the safety of drawing and inserting the rotor 20.

The slide plate 40 provided with the inclination sensor 500 forms a symmetrical structure, that is, the symmetry line of the recess 42 coincides with the symmetry line of the slide plate 40. When the data measured by the inclination sensor 500 is 0, it means that the slide plate 40 is in an optimal position. In this embodiment, as viewed from the steam end 12 to the exciter end 14 still, the optimal position is where the lowest point of the slide plate 40 coincides with the lowest point of the inner wall of the stator 30.

As shown in FIG. 2, when the length by which the rotor 20 is drawn out is greater than or equal to half the total length of the rotor 20, since the length of the rotor 20 out of the stator 30 is long, the data measured by the range-finding probes 100 on the windshield 32 can only represent the distance from the range-finding probes 100 to the middle of the rotor 20, and cannot reflect the actual amplitude of swaying of the second end 24. Thus, a case where the first end 22 collides with the stator 30 due to the unstable center of gravity may occur when the rotor 20 is being drawn out. In order to further improve the safety, the measurement and control system for generator rotor pumping 70 is provided with a level sensor 600 on the rotor 20. The level sensor 600 is provided on a side wall of the rotor 20 and is used for measuring the levelness of the rotor 20. The level sensor 600 is connected to the control module 200 and can send third information to the control module 200, the third information being the levelness of the rotor 20, and the display screen 300 can display the third information. In this embodiment, two level sensors 600 are provided, one near the first end 22 and the other near the second end 24. The two level sensors 600 can reflect the difference in height between the first end 22 and the second end 24 of the rotor 20. A worker needs to adjust the position of the double lifting rope 60 relative to the rotor 20 according to the result measured by the level sensor 600. For example, when the first end 22 is higher, the double lifting rope 60 needs to be moved to the left with respect to the rotor, and when the second end 24 is higher, the double lifting rope 60 needs to be moved to the right with respect to the rotor. Only when the center of the double lifting rope 60 is as close as possible to the center of gravity of the rotor 20 can the rotor 20 reduce the sway amplitude as much as possible.

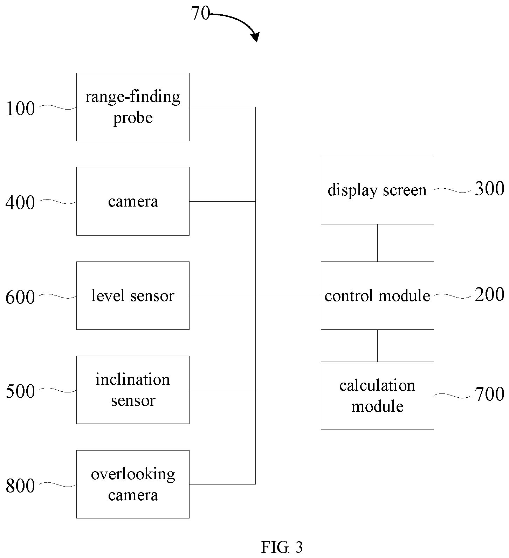

As shown in FIG. 3, the measurement and control system for generator rotor pumping 70 further includes a calculation module 700 connected to the control module 200 and capable of calculating a correction value based on the first information and the third information. In particular, the calculation module 700 can provide adjustment recommendations based on the measurements of each range-finding probe 100, including adjustment directions and adjustment values. The calculation module 700 can also calculate the adjustment direction and the adjustment value of the double lifting rope 60 through a preset algorithm according to the measurement result of the level sensor 600. This method of correcting the position of the rotor 20 is fast, error-free and safe.

In this embodiment, the control module 200, the display screen 300, and the calculation module 700 are integrated on a mobile terminal, which may be a mobile phone, a tablet, a computer, etc. When the data measured by the range-finding probes 100, the inclination sensor 500, and the level sensor 600 differ greatly, the mobile terminal may also set an alarm mode to warn a worker.

As shown in FIG. 1, the measurement and control system for generator rotor pumping 70 further includes two overlooking cameras 800, wherein one overlooking camera 800 is used for photographing a working area of the steam end 12 and the other overlooking camera 800 is used for photographing a working area of the exciter end 14. The two overlooking cameras 800 are both connected with the control module 200, and can send the pictures to the control module 200 to be displayed on the display screen 300, so that a worker responsible for commanding can know the working conditions of the steam end 12 and the exciter end 14 at the same time, as a result, frequent intercommunication and back-and-forth viewing are avoided, commanding is facilitated, and time is saved.

The technical features of the above-mentioned embodiments can be combined in any combination, and in order to simplify the description, not every possible combination of the technical features in the above-mentioned embodiments is described.

## Claims

1. A measurement and control system for monitoring a position of a rotor (20) relative to a stator (30) of a generator while drawing or inserting the rotor in the generator, the system comprising:
a plurality of range-finding probes (100), some of the range-finding probes being providable on a side wall of the rotor (20) at intervals close to a first axial end (22) of the rotor (20), some of the range-finding probes being providable on an inner wall of the stator (30) at intervals close to the axial exciter end (14) of the generator, that is located on the axially opposite side to the first axial end (22) of the rotor (20) when the rotor is inserted or removed from the generator, wherein each of the range-finding probes (100) is used for obtaining a gap between a region of the rotor (20) and a region of the stator (30);
an inclination sensor (500), providable in a slide plate (40) positioned in the stator (30) and bearing the rotor (20) during the insertion or removal of the rotor, the inclination sensor (500) being used for measuring a levelness of the slide plate (40);
a control module (200), connected with the range-finding probes (100) and capable of receiving first information sent by the range-finding probes, the first information being the gap between the rotor (20) and the stator (30); the control module (200) being also connected with the inclination sensor (500) and capable of receiving second information sent by the inclination sensor (500), the second information being the levelness of the slide plate (40); and
a display screen (300), connected with the control module (200) and capable of displaying the first information and the second information.

2. The measurement and control system according to claim 1, further comprising cameras (800) connected to the control module (200), a plurality of the cameras being provided corresponding to the range-finding probes (100) one to one, the cameras (800) being capable of sending pictures to the control module (200) to be displayed on the display screen (300), and the camera (800) comprising a light source for illuminating a photographing region of the camera.

3. The measurement and control system of claim 2, wherein the range-finding probes close to the first end (22) of the rotor (20) are disposed on a fan seat (28) of the rotor (20) and the range-finding probes close to the first end (14) of the generator are disposed on a windshield ring (32) of the stator (30).

4. The measurement and control system according to claim 3, wherein eight range-finding probes are provided, four of the range-finding probes being arranged on the fan seat (28) at intervals, and the other four of the range-finding probes being arranged on the windshield ring (32) at intervals.

5. The measurement and control system according to claim 4, wherein on the fan seat (28), the four range-finding probes are arranged opposite to each other in pairs, two of the range-finding probes are located in a vertical direction, and the other two of the range-finding probes are located in a horizontal direction; and
on the wind shield ring (32), the four range-finding probes are arranged opposite to each other in pairs, two of the range-finding probes are located in a vertical direction, and the other two of the range-finding probes are located in a horizontal direction.

6. The measurement and control system of claim 1, wherein the inclination sensor (500) is accommodated in a recess (42) in the slide plate (40), the inclination sensor (500) and the slide plate (40) form a symmetrical structure together.

7. The measurement and control system according to claim 1, further comprising a level sensor (600) provided on a side wall of the rotor (20) and used for measuring the levelness of the rotor (20), the level sensor (600) being connected to the control module (200) and capable of sending third information to the control module (200) so that the third information is displayed on the display screen (300), the third information being the levelness of the rotor (20).

8. The measurement and control system of claim 7, wherein two level sensors (600) are provided, one of the level sensors being close to the first end (20) of the rotor (20) and the other of the level sensors being close to a second end (24) of the rotor (20).

9. The measurement and control system according to claim 7, further comprising a calculation module (700) connected with the control module (200) and the display screen (300), the calculation module (700) being capable of calculating a correction value based on the first information and the third information, and the display screen (300) being capable of displaying the correction value.

10. The measurement and control system according to claim 1, further comprising two overlooking cameras (800), one overlooking camera (800) being used for photographing a working area of a second end (12) of the generator and the other overlooking camera (800) being used for photographing a working area of the first end (14) of the generator, and the two overlooking cameras (800) being both connected with the control module (200) and capable of sending the pictures to the control module (200) to be displayed on the display screen (300).

## Patentansprüche

1. Mess- und Steuerungssystem zum Überwachen einer Position eines Rotors (20) relativ zu einem Stator (30) eines Generators, während der Rotor in den Generator gezogen oder eingeführt wird, wobei das System umfasst:
eine Vielzahl von Entfernungsmesssonden (100), wobei einige der Entfernungsmesssonden an einer Seitenwand des Rotors (20) in Abständen nahe einem ersten axialen Ende (22) des Rotors (20) bereitstellbar sind, einige der Entfernungsmesssonden an einer Innenwand des Stators (30) in Abständen nahe dem axialen Erregerende (14) des Generators bereitstellbar sind, die sich auf der axial gegenüberliegenden Seite des ersten axialen Endes (22) des Rotors (20) befindet, wenn der Rotor in den Generator eingesetzt oder aus ihm entfernt wird, wobei jede der Entfernungsmesssonden (100) verwendet wird, um einen Spalt zwischen einem Bereich des Rotors (20) und einem Bereich des Stators (30) zu ermitteln;
einen Neigungssensor (500), der in einer in dem Stator (30) positionierten und den Rotor (20) tragenden Gleitplatte (40) bereitstellbar ist während des Einsetzens oder Entfernens des Rotors,
wobei der Neigungssensor (500) zum Messen einer Ebenheit der Gleitplatte (40) verwendet wird;
ein Steuerungsmodul (200), das mit den Entfernungsmesssonden (100) verbunden ist und in der Lage ist, von den Entfernungsmesssonden gesendete erste Informationen zu empfangen, wobei die ersten Informationen der Spalt zwischen dem Rotor (20) und dem Stator (30) sind; wobei das Steuerungsmodul (200) auch mit dem Neigungssensor (500) verbunden ist und zweite Informationen empfangen kann, die von dem Neigungssensor (500) gesendet werden, wobei die zweiten Informationen die Ebenheit der Gleitplatte (40) sind; und
einen Anzeigebildschirm (300), der mit dem Steuerungsmodul (200) verbunden ist und die ersten Informationen und die zweiten Informationen anzeigen kann.

2. Mess- und Steuerungssystem nach Anspruch 1, ferner umfassend Kameras (800), die mit dem Steuerungsmodul (200) verbunden sind, wobei eine Vielzahl der Kameras entsprechend den Entfernungsmesssonden (100) eins zu eins vorgesehen sind, wobei die Kameras (800) in der Lage sind, Bilder an das Steuerungsmodul (200) zu senden, um auf dem Anzeigebildschirm (300) angezeigt zu werden, und wobei die Kamera (800) eine Lichtquelle zum Beleuchten eines Aufnahmebereichs der Kamera umfasst.

3. Mess- und Steuerungssystem nach Anspruch 2, wobei die Entfernungsmesssonden nahe dem ersten Ende (22) des Rotors (20) auf einem Lüftersitz (28) des Rotors (20) und die Entfernungsmesssonden nahe dem ersten Ende (14) des Generators auf einem Windschutzring (32) des Stators (30) angeordnet sind.

4. Mess- und Steuerungssystem nach Anspruch 3, wobei acht Entfernungsmesssonden vorgesehen sind, wobei vier der Entfernungsmesssonden in Abständen auf dem Lüftersitz (28) und die anderen vier der Entfernungsmesssonden in Abständen auf dem Windschutzring (32) angeordnet sind.

5. Mess- und Steuerungssystem nach Anspruch 4, wobei auf dem Lüftersitz (28) die vier Entfernungsmesssonden paarweise einander gegenüberliegend angeordnet sind, zwei der Entfernungsmesssonden in einer vertikalen Richtung angeordnet sind und die anderen zwei Entfernungsmesssonden in einer horizontalen Richtung angeordnet sind; und
auf dem Windschutzring (32) die vier Entfernungsmesssonden paarweise einander gegenüberliegend angeordnet sind, zwei der Entfernungsmesssonden in einer vertikalen Richtung angeordnet sind und die anderen zwei Entfernungsmesssonden in einer horizontalen Richtung angeordnet sind.

6. Mess- und Steuerungssystem nach Anspruch 1, wobei der Neigungssensor (500) in einer Ausnehmung (42) in der Gleitplatte (40) untergebracht ist, wobei der Neigungssensor (500) und die Gleitplatte (40) zusammen eine symmetrische Struktur bilden.

7. Mess- und Steuerungssystem nach Anspruch 1, ferner umfassend einen Niveausensor (600), der an einer Seitenwand des Rotors (20) vorgesehen ist und zum Messen der Niveaulage des Rotors (20) verwendet wird, wobei der Niveausensor (600) mit dem Steuerungsmodul (200) verbunden ist und in der Lage ist, dritte Informationen an das Steuerungsmodul (200) zu senden, so dass die dritten Informationen auf dem Anzeigebildschirm (300) angezeigt werden, wobei die dritte Informationen die Niveaulage des Rotors (20) sind.

8. Mess- und Steuerungssystem nach Anspruch 7, wobei zwei Niveausensoren (600) vorgesehen sind, wobei sich einer der Niveausensoren nahe dem ersten Ende (20) des Rotors (20) und der andere der Niveausensoren nahe einem zweiten Ende (24) des Rotors (20) befindet.

9. Mess- und Steuerungssystem nach Anspruch 7, ferner umfassend ein Berechnungsmodul (700), das mit dem Steuerungsmodul (200) und dem Anzeigebildschirm (300) verbunden ist, wobei das Berechnungsmodul (700) in der Lage ist, einen Korrekturwert basierend auf den ersten Informationen und den dritten Informationen zu berechnen, und der Anzeigebildschirm (300) in der Lage ist, den Korrekturwert anzuzeigen.

10. Mess- und Steuerungssystem nach Anspruch 1, ferner umfassend zwei Übersichtskameras (800), wobei eine Übersichtskamera (800) zum Fotografieren eines Arbeitsbereichs eines zweiten Endes (12) des Generators verwendet wird und die andere Übersichtskamera (800) zum Fotografieren eines Arbeitsbereichs des ersten Endes (14) des Generators verwendet wird, und die zwei Übersichtskameras (800) beide mit dem Steuerungsmodul (200) verbunden sind und in der Lage sind, die Bilder an das Steuerungsmodul (200) zu senden, um auf dem Anzeigebildschirm (300) angezeigt zu werden.

## Revendications

1. Système de mesure et de commande pour surveiller une position d'un rotor (20) par rapport à un stator (30) d'un générateur lors de la traction ou de l'insertion du rotor dans le générateur, le système comprenant :
une pluralité de sondes de télémétrie (100), certaines des sondes de télémétrie pouvant être prévues sur une paroi latérale du rotor (20) à des intervalles proches d'une première extrémité axiale (22) du rotor (20), certaines des sondes de télémétrie pouvant être prévues sur une paroi interne du stator (30) à des intervalles proches de l'extrémité d'excitation axiale (14) du générateur, qui est située sur le côté axialement opposé à la première extrémité axiale (22) du rotor (20) lorsque le rotor est inséré ou retiré du générateur, dans lequel chacune des sondes de télémétrie (100) est utilisée pour obtenir un espace entre une région du rotor (20) et une région du stator (30) ;
un capteur d'inclinaison (500), pouvant être prévu dans une plaque coulissante (40) positionnée dans le stator (30) et portant le rotor (20) pendant l'insertion ou le retrait du rotor, le capteur d'inclinaison (500) étant utilisé pour mesurer une planéité de la plaque coulissante (40) ;
un module de commande (200), connecté aux sondes de télémétrie (100) et capable de recevoir des premières informations envoyées par les sondes de télémétrie, les premières informations étant l'espace entre le rotor (20) et le stator (30) ; le module de commande (200) étant également connecté au capteur d'inclinaison (500) et capable de recevoir des deuxièmes informations envoyées par le capteur d'inclinaison (500), les deuxièmes informations étant la planéité de la plaque coulissante (40) ; et
un écran d'affichage (300), connecté au module de commande (200) et capable d'afficher les premières informations et les deuxièmes informations.

2. Système de mesure et de commande selon la revendication 1, comprenant en outre des caméras (800) connectées au module de commande (200), une pluralité de caméras étant prévue en correspondance aux sondes de télémétrie (100) une à une, les caméras (800) étant capables d'envoyer des images au module de commande (200) pour être affichées sur l'écran d'affichage (300), et la caméra (800) comprenant une source de lumière pour éclairer une région de photographie de la caméra.

3. Système de mesure et de commande selon la revendication 2, dans lequel les sondes de télémétrie proches de la première extrémité (22) du rotor (20) sont disposées sur un siège de soufflante (28) du rotor (20) et les sondes de télémétrie proches de la première extrémité (14) du générateur sont disposées sur une bague de pare-vent (32) du stator (30).

4. Système de mesure et de commande selon la revendication 3, dans lequel huit sondes de télémétrie sont prévues, quatre des sondes de télémétrie étant agencées sur le siège de soufflante (28) à des intervalles, et les quatre autres des sondes de télémétrie étant agencées sur la bague de pare-vent (32) à des intervalles.

5. Système de mesure et de commande selon la revendication 4, dans lequel sur le siège de soufflante (28), les quatre sondes de télémétrie sont agencées les unes en face des autres par paires, deux des sondes de télémétrie sont situées dans une direction verticale, et les deux autres sondes de télémétrie sont situées dans une direction horizontale ; et
sur la bague de pare-vent (32), les quatre sondes de télémétrie sont agencées les unes en face des autres par paires, deux des sondes de télémétrie sont situées dans une direction verticale, et les deux autres des sondes de télémétrie sont situées dans une direction horizontale.

6. Système de mesure et de commande selon la revendication 1, dans lequel le capteur d'inclinaison (500) est logé dans un évidement (42) de la plaque coulissante (40), le capteur d'inclinaison (500) et la plaque coulissante (40) forment ensemble une structure symétrique.

7. Système de mesure et de commande selon la revendication 1, comprenant en outre un capteur de niveau (600) prévu sur une paroi latérale du rotor (20) et utilisé pour mesurer la planéité du rotor (20), le capteur de niveau (600) étant connecté au module de commande (200) et capable d'envoyer des troisièmes informations au module de commande (200) de sorte que les troisièmes informations sont affichées sur l'écran d'affichage (300), les troisièmes informations étant la planéité du rotor (20) .

8. Système de mesure et de commande selon la revendication 7, dans lequel deux capteurs de niveau (600) sont prévus, l'un des capteurs de niveau étant proche de la première extrémité (20) du rotor (20) et l'autre des capteurs de niveau étant proche d'une seconde extrémité (24) du rotor (20).

9. Système de mesure et de commande selon la revendication 7, comprenant en outre un module de calcul (700) connecté au module de commande (200) et à l'écran d'affichage (300), le module de calcul (700) étant capable de calculer une valeur de correction sur la base des premières informations et des troisièmes informations, et l'écran d'affichage (300) étant capable d'afficher la valeur de correction.

10. Système de mesure et de commande selon la revendication 1, comprenant en outre deux caméras de surveillance (800), une caméra de surveillance (800) étant utilisée pour photographier une zone de travail d'une seconde extrémité (12) du générateur et l'autre caméra de surveillance (800) étant utilisée pour photographier une zone de travail de la première extrémité (14) du générateur, et les deux caméras de surveillance (800) étant toutes deux connectées au module de commande (200) et capables d'envoyer les images au module de commande (200) pour être affichées sur l'écran d'affichage (300).
